# EUROPÄISCHE PATENTSCHRIFT

(11) **EP 0 915 780 B1**
(45) Veröffentlichungstag und Bekanntmachung des Hinweises auf die Patenterteilung: **17.10.2001**
(21) Anmeldenummer: 97935423.0
(22) Anmeldetag: 15.07.1997
(51) Int. Cl.: B60R 11/02, G07C 9/00

(54) **ELEKTRONISCHES ZUSATZGERÄT FÜR EIN AUTOMOBIL, INSBESONDERE AUTO-RUNDFUNKGERÄT, MIT EINER SCHLÜSSELKARTE**
ELECTRONIC ACCESSORY FOR A MOTOR VEHICLE, IN PARTICULAR FOR A CAR RADIO, COMPRISING A KEY CARD
ACCESSOIRE ELECTRONIQUE POUR AUTOMOBILE, NOTAMMENT POUR UN AUTORADIO, COMPORTANT UNE CARTE D'ACCES

(30) Priorität: 05.08.1996 DE 19631591
(43) Veröffentlichungstag der Anmeldung: 19.05.1999
(73) Patentinhaber: ROBERT BOSCH GMBH, 70442 Stuttgart (DE)
(72) Erfinder: GROEGER, Klaus-Erwin, D-31199 Diekholzen (DE)
(86) Internationale Anmeldenummer: DE9701491
(87) Internationale Veröffentlichungsnummer: WO9805532

(56) Entgegenhaltungen:
- EP-A- 0 329 513
- EP-A- 0 525 895
- DE-A- 4 014 371
- DE-C- 3 520 395
- DE-C- 4 337 262
- US-A- 4 604 708
- US-A- 4 734 896

## Beschreibung

Die Erfindung betrifft ein elektronisches Zusatzgerät für ein Automobil, insbesondere Auto-Rundfunkgerät, mit einer als Chipkarte ausgebildeten Schlüsselkarte, die als Diebstahlsicherung des Geräts in einen entsprechenden Aufnahmeschlitz als Voraussetzung für ein Wiedereinschalten einschiebbar ist.

Bereits seit einigen Jahren sind elektronische Zusatzgeräte in Form von Auto-Rundfunkgeräten im Gebrauch, deren Betrieb nur möglich ist, wenn eine Schlüsselkarte (Keycard) in den Aufnahmeschlitz des Auto-Rundfunkgeräts eingeschoben ist. Ein solches Zusatzgerät ist aus dem Document EP-A-525 895 bekannt. Auf der Schlüsselkarte ist eine analoge Widerstandsmatrix integriert, die einen Code darstellt. Ein äquivalenter Code ist in einem Referenzspeicher des Rundfunkgeräts in Form einer binären Information abgelegt. Dies hat zur Folge, daß das Auto-Rundfunkgerät nur mit der zutreffenden Schlüsselkarte in Betrieb nehmbar ist. Die Schlüsselkarte muß während der gesamten Betriebszeit im Aufnahmeschlitz verbleiben. Das Herausnehmen führt sofort zu einem Abschalten des Geräts. Ein Wiedereinschalten ohne die Schlüsselkarte ist nicht möglich.

Seit kurzem ist die mit einer analogen Widerstandsmatrix ausgebildete Schlüsselkarte durch eine Chipkarte ersetzt worden, die die gleichen Funktionsmerkmale aufweist.

Die Funktion der bekannten Schlüsselkarten besteht darin, Autoradios dadurch diebstahlsicher zu machen, daß sie ohne die zugehörige Schlüsselkarte, also beispielsweise nach einem Diebstahl, nicht wieder in Betrieb nehmbar sind, so daß sie wertlos geworden sind. Da die Schlüsselkarte während des gesamten Betriebs des Auto-Rundfunkgeräts in diesem verbleibt, besteht die Gefahr, daß die Schlüsselkarte beim Abstellen des Autos im Gerät vergessen wird, so daß die gewünschte Diebstahlsicherungsfunktion nicht mehr vorhanden ist. Ein durch die Sicherungsfunktion bedingter Nachteil besteht ferner darin, daß auch der berechtigte Benutzer das in seinem Fahrzeug befindliche Auto-Rundfunkgerät nicht mehr in Benutzung nehmen kann, wenn er seine Schlüsselkarte verlegt hat und eine zweite Karte nicht greifbar ist. Als nachteilig muß ferner angesehen werden, daß für das Auto-Rundfunkgerät neben den vielen anderen, in Gebrauch befindlichen Magnetstreifen- bzw. Chipkarten eine eigene weitere Karte sicher und immer griffbereit in der Brieftasche oder im Portemonnaie transportiert werden muß.

Ausgehend von der Problemstellung, bezüglich der genannten Nachteile Handhabungsverbesserungen zu erreichen, ist erfindungsgemäß ein elektronisches Zusatzgerät für ein Automobil, insbesondere Auto-Rundfunkgerät, mit einer als Chipkarte ausgebildeten Schlüsselkarte der eingangs erwähnten Art gekennzeichnet durch eine solche Steuerschaltung des Geräts, daß die eingeschobene Chipkarte auch nach dem Herausnehmen aus dem Aufnahmeschlitz den Betrieb des Geräts bis zum Abklemmen von der Stromversorgung ermöglicht, und daß die Chipkarte als Multifunktionskarte zur Funktion mit anderen Geräten ausgebildet ist.

Erfindungsgemäß ist es somit möglich, die zum Einschalten des elektronischen Zusatzgeräts eingeschobene Chipkarte während des Betriebs des elektronischen Zusatzgeräts zu entnehmen. Dieser Ausgestaltung des erfindungsgemäßen elektronischen Zusatzgeräts, die im Gegensatz zu der bisher für erforderlich gehaltenen Sicherungsfunktion steht, liegt der Gedanke zugrunde, daß für die Diebstahlsicherungsfunktion lediglich erforderlich ist, daß das elektronische Zusatzgerät nach der Installation in dem betreffenden Fahrzeug autorisiert in Betrieb genommen wird. Die Möglichkeit des Wiedereinschaltens nach entnommener Chipkarte ist nicht schädlich, wenn die Stromversorgung für das elektronische Zusatzgerät ununterbrochen geblieben ist. In diesem Fall ist sichergestellt, daß sich das elektronische Zusatzgerät unverändert am Einbauort befindet. Ein typischer Autogeräte-Diebstahl führt hingegen zu einer Entfernung des elektronischen Zusatzgeräts von seinem Einbauort, geht somit zwangsläufig mit einem Abklemmen des Zusatzgeräts von der Stromversorgung einher. Das erfindungsgemäße Zusatzgerät ist daher ohne die autorisierende Schlüsselkarte nicht wieder einschaltbar, wenn eine Trennung des Zusatzgeräts von der Stromversorgung einmal stattgefunden hat.

Die erfindungsgemäße Ausbildung des elektronischen Zusatzgeräts hat somit den Vorteil, daß am Installationsort, also regelmäßig von dem berechtigten Autofahrer, das einmal berechtigt in Betrieb genommene Zusatzgerät immer wieder eingeschaltet werden kann, ohne daß hierfür eine Schlüsselkarte erforderlich ist. Dennoch bleibt die Diebstahlsicherungsfunktion erhalten, weil die Wiederinbetriebnahme des Zusatzgeräts nach dem Abklemmen von der Stromversorgung, also regelmäßig vom Bordnetz des Autos, nicht ohne Schlüsselkarte möglich ist. Da die Schlüsselkarte bei der erfindungsgemäßen Ausbildung des Zusatzgeräts regelmäßig nicht im Gerät verbleibt, wird es unwahrscheinlicher, daß die Schlüsselkarte im Gerät vergessen wird. Die Diebstahlsicherungsfunktion wird daher eher verbessert.

Für das erfindungsgemäße Zusatzgerät muß die Schlüsselkarte somit nur dann verwendet werden, wenn nach einem Abklemmen des Zusatzgeräts von der Stromversorgung des Autos, beispielsweise nach Durchführung einer Reparatur, eine neue Inbetriebnahme erforderlich ist. Wird in einer bevorzugten Ausführungsform die Chipkarte so ausgebildet, daß auf ihr eine individuelle Belegung von Stationstasten abspeicherbar ist, kann die Schlüsselkarte auch dann verwendet werden, wenn eine neue individuelle Belegung der Stationstasten auf dem Auto-Rundfunkgerät wirksam gemacht werden soll.

Da erfindungsgemäß die Schlüsselkarte nach der Inbetriebnahme des Geräts aus diesem herausnehmbar ist, kann als Schlüsselkarte erstmalig auch eine Multifunktionskarte Verwendung finden, die in Verbindung mit anderen Geräten, beispielsweise Geldautomaten, Abbuchungs-Zahlungssystemen o.ä. weitere Funktionen ausüben kann. Es ist daher möglich, als die zur Diebstahlsicherung verwendete Schlüsselkarte eine Chipkarte zu verwenden, die vom Inhaber für die Inanspruchnahme anderer Dienste sowieso benötigt wird und auf der lediglich für die Schlüsselfunktion für das elektronische Zusatzgerät ein Bereich reserviert bleibt, der vom Hersteller des Zusatzgeräts bezüglich des Schlüsselcodes bzw. etwaiger Zusatzfunktionen programmierbar ist. Der Benutzer des erfindungsgemäßen elektronischen Zusatzgeräts ist daher nicht gezwungen, eigens für das Zusatzgerät eine weitere Karte ständig griffbereit zu verwahren.

Obwohl das erfindungsgemäße Gerät auch ohne erneutes Einschieben der Chipkarte in Betrieb genommen werden kann, wenn keine Trennung vom Bordnetz stattgefunden hat, kann die Chipkarte zu jedem Ein- bzw. Ausschalten des Gerätes durch Einschieben bzw. Entnahme genutzt werden. Das Zusatzgerät kann somit während des Aufenthalts des Inhabers der Chipkarte als Aufbewahrungsort für die Karte dienen, wenn diese auch für andere Geräte und Funktionen verwendbar ist.

Das elektronische Zusatzgerät umfaßt vorzugsweise die Funktion eines Auto-Rundfunkgeräts, kann aber auch weitere autospezifische Komponenten umfassen, die mit dem Auto-Rundfunkgerät zu einem Gesamtsystem vernetzt sind. Derartige Komponenten können beispielsweise Navigationssysteme, eine ganggenaue Uhr, Gebührenabbuchungssysteme o.ä. sein. Selbstverständlich ist es auch möglich, die Auto-Rundfunkgerätefunktion hierbei entfallen zu lassen.

Anhand der beigefügten Prinzipskizze soll die Funktion des elektronischen Zusatzgeräts mit der Schlüsselkarte näher erläutert werden.

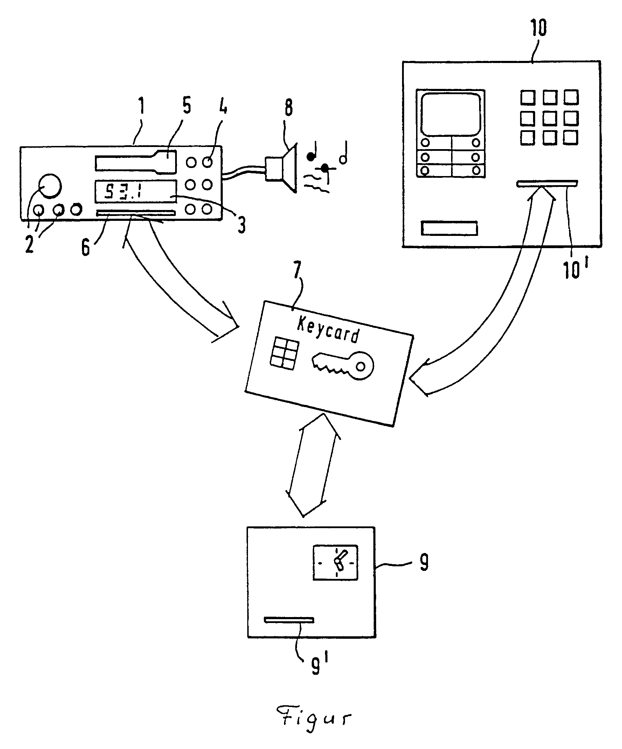

Die Zeichnung zeigt ein elektronisches Zusatzgerät in Form eines Auto-Rundfunkgeräts 1, das in üblicher Weise mit Einstellreglern 2, einem Display 3, Stationstasten 4, einer Aufnahme 5 für Musikkassetten und einem Aufnahmeschlitz 6 für eine Schlüsselkarte 7 ausgestattet ist.

An das Auto-Rundfunkgerät sind Lautsprecher 8 angeschlossen.

Die Schlüsselkarte 7 ist - entsprechend dem dargestellten Doppelfall - in den Aufnahmeschlitz des Auto-Rundfunkgeräts 1 einschiebbar, so daß das Auto-Rundfunkgerät nach der Installation erstmalig eingeschaltet werden kann. Danach kann die Schlüsselkarte 7 aus dem Auto-Rundfunkgerät 1 herausgenommen und als Multifunktionskarte verwendet werden, um beispielsweise zum Geldabheben mit einem Bankautomaten 8 oder in Verbindung mit einem Zugangskontrollgerät 9 verwendet werden, wobei die Geräte 8, 9 jeweils einen entsprechenden Aufnahmeschlitz 8', 9' für die Schlüsselkarte 7 aufweisen.

Die Schlüsselkarte 7 kann in dem Auto-Rundfunkgerät 1 aufbewahrt werden. Sie kann ferner dazu verwendet werden, eine individuelle Belegung der Stationstasten 4 des Auto-Rundfunkgeräts 1 wirksam zu schalten.

Sollte das Auto-Rundfunkgerät, beispielsweise zu Reparaturzwecken, vom Bordnetz getrennt worden sein, ermöglicht das Einschieben der Schlüsselkarte 7 in den Aufnahmeschlitz 6 des Auto-Rundfunkgeräts dessen erneute Inbetriebnahme.

## Patentansprüche

1. Elektronisches Zusatzgerät für ein Automobil, insbesondere Auto-Rundfunkgerät (1), mit einer als Chipkarte ausgebildeten Schlüsselkarte (7), die als Diebstahlsicherung des Geräts (1) in einen entsprechenden Aufnahmeschlitz (6) als Voraussetzung für ein Wiedereinschalten einschiebbar ist, **dadurch gekennzeichnet, daß** eine solche Steuerschaltung des Gerätes (1) vorgesehen ist, die auch nach dem Herausnehmen der eingeschobenen Chipkarte (7) aus dem Aufnahmeschlitz (6) den Betrieb des Geräts (1) bis zum Abklemmen von der Stromversorgung ermöglicht, und daß die Chipkarte (7) als Multifunktionskarte zur Funktion mit anderen Geräten (8,9) ausgebildet ist.

2. Elektonisches Zusatzgerät, nämlich Auto-Rundfunkgerät, nach Anspruch 1, **dadurch gekennzeichnet, daß** auf der Chipkarte (7) eine individuelle Belegung von Stationstasten (4) abspeicherbar ist.

## Claims

1. Electronic accessory for a motor vehicle, in particular a car radio (1), having a key card (7) which is embodied as a chip card and which can be inserted as an anti-theft protection for the radio (1) into a corresponding holding slot (6) as a precondition for switching on again, **characterized in that** a control circuit of the radio (1) is provided which is such that it permits the radio (1) to operate until the power supply is disconnected, even after the inserted chip card (7) has been removed from the holding slot (6), and **in that** the chip card (7) is embodied as a multifunction card for operating with other devices (8, 9).

2. Electronic accessory, namely car radio, according to Claim 1, **characterized in that** an individual assignment of station keys (4) can be stored on the chip card (7).

## Revendications

1. Accessoire électronique pour automobile, notamment autoradio (1) équipé d'une carte d'accès (7) qui, en tant que sécurité contre le vol de l'appareil (1) doit être introduite dans une fente de réception (6) correspondante, comme condition à une remise en service,
**caractérisé en ce qu'**
il est prévu, pour commander l'appareil (1), un circuit qui, même après que la carte à puce (7) introduite, ait été retirée de la fente de réception(6), permet à l'appareil (1) de fonctionner jusqu'à ce qu'il soit coupé de l'alimentation en courant, la carte à puce (7), multifonctionnelle, pouvant fonctionner avec d'autres appareils (9, 10).

2. Accessoire électronique, notamment autoradio selon la revendication 1,
**caractérisé en ce que**
sur la carte à puce (7) on peut mémoriser une série individuelle de touches de station (4).
